# EUROPEAN PATENT SPECIFICATION

(11) **EP 4 613 100 B1**
(45) Date of publication and mention of the grant of the patent: **17.06.2026**
(21) Application number: 25158236.7
(22) Date of filing: 17.02.2025
(51) Int. Cl.: A21C 9/08, A21C 15/00

(54) **SYSTEM FOR SUPPLYING A FILLING TO FOODSTUFF PRODUCTS**
SYSTEM ZUR ZUFÜHRUNG EINER FÜLLUNG ZU LEBENSMITTELPRODUKTEN
SYSTÈME POUR FOURNIR UNE GARNITURE À DES PRODUITS ALIMENTAIRES

(30) Priority: 06.03.2024 IT 202400004990
(43) Date of publication of application: 10.09.2025
(73) Proprietor: SOREMARTEC S.A., 2633 Senningerberg (LU)
(72) Inventor: MOLLO, Marco, L-2633 Senningerberg (LU)
(74) Representative: Buzzi, Notaro & Antonielli d'Oulx S.p.A.

(56) References cited:
- EP-B1- 3 574 761
- FR-A5- 2 041 841
- US-A- 3 871 274
- US-B2- 11 582 975

## Description

The present invention regards a system for supplying a filling to foodstuff products, the system comprising:
- at least one conveyor for feeding along a path of advance a succession of rows of foodstuff products oriented in a direction transverse to the path of advance;
- a dispensing head for dispensing the filling onto or into the products of each row of the succession of rows of foodstuff products; and
- a vibrating station for subjecting each row of products fed by said at least one conveyor to an oscillatory motion to spread out the filling dispensed.

A system of the type described above may for example be used for dispensing a filling on oven-baked products, such as biscuits. Via the above system, the filling is dispensed onto the biscuit, for example within a cavity made therein, and then the filling is spread out so that it comes to cover the entire cavity as a result of the oscillatory motion caused by the vibrating station.

In solutions according to the prior art, the conveyor configured for feeding the products through the vibrating station comprises a plurality of supports provided with housings for receiving the rows of products and keeping them in the respective orderly arrangement during the action exerted thereon by the vibrating station.

The above solutions according to the prior art present, however, the drawback of requiring replacement of the aforesaid supports of the conveyor with new supports of appropriate shape, whenever there is

envisaged start of operation of the system on a new type of foodstuff products. US 3 871 274 A and US 11 582 975 B2 disclose certain prior art that may be of interest as technical background.

In this context, the object of the present invention is to provide a system of the type referred to at the start that will be improved over known solutions.

In particular, an object of the present invention is to provide a more versatile system.

A further object of the present invention is to provide a system capable of achieving larger production volumes.

One or more of the aforesaid objects are achieved via a system according to claim 1.

The present invention moreover regards a method according to claim 11.

The claims form an integral part of the teaching provided herein.

Further characteristics and advantages of the present invention will emerge clearly from the ensuing description with reference to the annexed drawings, which are provided purely by way of non-limiting example and in which:
- Figure 1 is a schematic illustration of an example of the system described herein; and
- Figure 2 illustrates, according to a top plan view, a part of the system of Figure 1.

In the ensuing description, various specific details are illustrated aimed at enabling an in-depth understanding of the embodiments. The embodiments may be obtained without one or more of the specific details, or with other methods, components, materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the present invention regards a system for supplying a filling to foodstuff products.

It should be noted that this solution has been devised specifically for applications on oven-baked products, in particular biscuits, but can in any case be advantageously used also for other types of foodstuff products, for example confectionery products, such as pralines or filled wafers, ice-creams, semifreddo, products of the pasta industry, products of the dairy sector, etc.

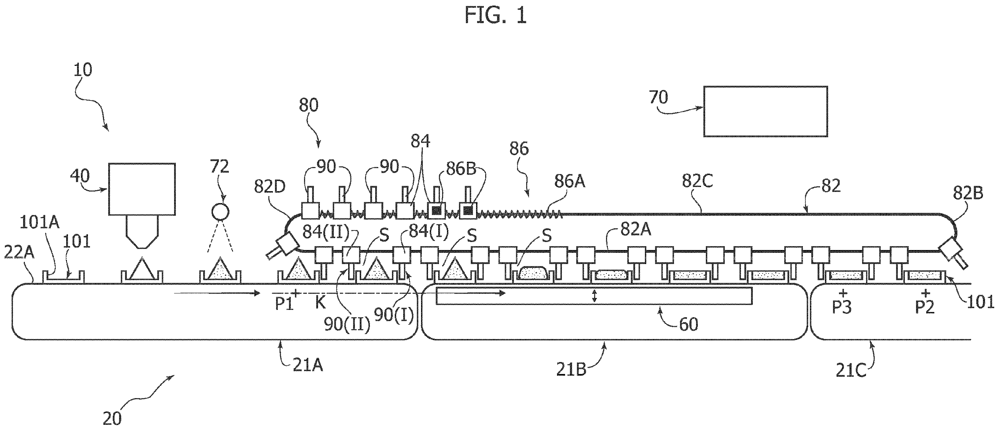

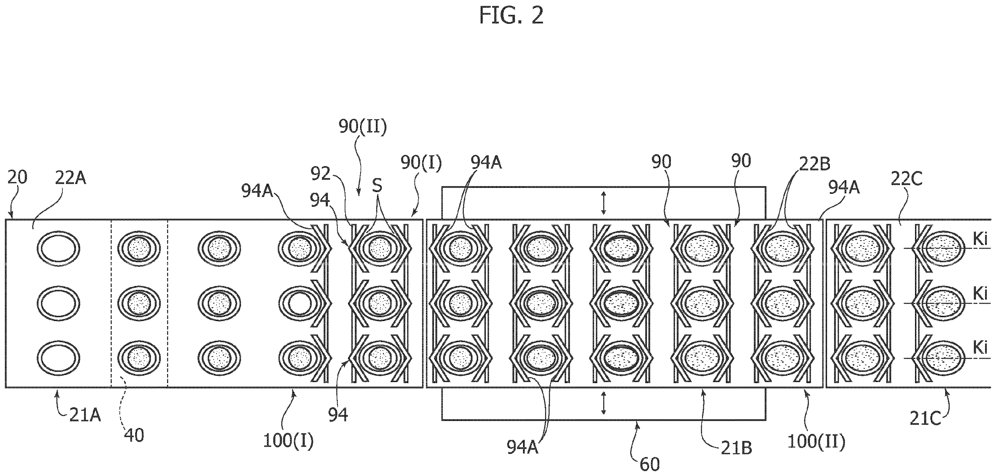

With reference to Figures 1 and 2, the system described herein - designated as a whole by the reference number 10 - comprises a conveyor 20 for feeding along a path of advance K a succession of rows 100 of foodstuff products 101 oriented in a direction transverse to the path of advance K.

According to an important characteristic of the system described herein, the conveyor 20 is configured for receiving the products 101 in a free state where these rest simply on a conveying surface, without being constrained in any way in a specific position.

In various preferred embodiments like the one illustrated, the conveyor 20 comprises, in succession, a first conveyor belt 21A, a second conveyor belt 21B, and a third conveyor belt 21C, which have respective conveying surfaces 22A, 22B, 22C that extend along the path of advance K.

The conveyor belt 21A is configured for receiving on its conveying surface 22A the rows of products 100 one after another from a station located upstream.

The system 10 further comprises a dispensing head 40 for dispensing a filling onto or into the products 101 of each row 100 that is positioned on top of the conveying surface 22A of the conveyor belt 21A.

In the example illustrated, the products 101 have a cavity 101A that is to receive the filling dispensed by the dispensing head 40. It should be noted that not necessarily do the foodstuff products on which the system described herein operates have to have a cavity for receiving the filling; they may, in fact, alternatively have just one surface that is to be coated with the filling.

The dispensing head 40 may be of any known type suited for the purposes referred to.

Preferably, the filling used is a viscous fluid material, for example characterized by a creamy consistency.

Downstream of the dispensing head 40 and in the region of the second conveyor belt 21B, the system 10 comprises a vibrating station 60 configured for subjecting each row of products 100 arranged on the conveying surface 22B of the conveyor belt 21B to an oscillatory motion so as to spread out the filling previously dispensed on the products 101.

In this connection, with reference to Figure 2, it may be noted how the filling of the products 101 of the row 100(I), which has just passed underneath the dispensing head 40, is basically concentrated in a central region of the cavity 101A of the products 101, and how, instead, the filling of the products 101 of the row 100(II), which has passed beyond the vibrating station 60, is spread out and substantially coats the entire cavities 101A.

In general, the action exerted by the vibrating station 60 has the function of spreading out the filling on the products so that it comes to coat a surface of these wider than the surface coated just after it has been dispensed by the dispensing head 40.

Preferably, the vibrating station 60 is operatively connected to at least a stretch of the conveying surface 22B of the conveyor belt 21B so as to subject the stretch itself to an oscillatory motion that will then involve the rows of products 100 that are passing through the stretch in question.

The person skilled in the sector will understand that the vibrating station 60 may extend even over the entire conveying surface 22B of the second conveyor belt 21B, in which case the vibrations generated by the station 60 propagate as far as the two opposite ends of the surface.

The vibrating station 60 may itself also be of a known type suited for the purposes referred to.

The third conveyor belt 21C receives the rows of products 100 from the second conveyor belt 21B to feed them to the subsequent stations of the production line; the respective products 101 present the filling spread out as required.

According to a further important characteristic of the system described herein, this comprises a containment unit 80 configured for containing the rows of products 100 while these traverse the vibrating station 60 and are subjected to the oscillatory motion referred to above.

In one or more preferred embodiments like the one illustrated, the containment unit 80 is positioned above the conveyor 20 and in the region of the vibrating station 60.

Preferably, the containment unit 80 extends from a position P1 upstream of the vibrating station 60, with reference to the path of advance K, and as far as a position P2 downstream of the vibrating station 60.

Even more preferably, the position P1 is in the region of the first conveyor belt 21A, whereas the position P2 is in the region of the third conveyor belt 21C.

In this way, as will be seen more clearly in what follows, the rows of products 100 are engaged and released by the containment unit 80 in positions in which they are certainly not subjected to the vibrations generated by the vibrating station 60. In alternative embodiments in which the vibrating station 60 is limited to a stretch of the conveyor belt to which it is associated, for example through the use of damping or isolating means capable of limiting propagation of the vibrations, the two positions P1 and P2, or at least one of these, may be located in the region of the conveyor belt in question. The person skilled in the sector will hence understand that the use of three conveyor belts as in the example illustrated does not constitute an essential characteristic.

In one or more preferred embodiments like the one illustrated, the containment unit 80 comprises a guide 82 that extends along a closed-loop path and has a preferably rectilinear bottom stretch 82A, a first, preferably curvilinear, stretch of reversal of motion 82B, a preferably rectilinear top stretch 82C, and a second, preferably curvilinear, stretch of reversal of motion 82D.

In one or more preferred embodiments like the one illustrated, the bottom stretch 82A extends along the path of supply K starting from the position P1 and as far as the position P2.

In one or more preferred embodiments like the one illustrated, the containment unit 80 further comprises a plurality of units 84 mobile along the guide 82, which each carry a respective containment member 90.

The containment members 90 have the function of providing circumscribed spaces S individually housed within which are the products 101 of the rows of products 100 that advance through the vibrating station 60 along the path of advance K.

In one or more preferred embodiments like the one illustrated, each containment member 90 comprises a beam 92 set in a direction parallel to the conveyor belt 21 and oriented in a direction transverse to the path of advance K. Moreover, the containment member 90 comprises a series of tabs 94, all projecting from the beam 92 on one and the same side, which are set facing the conveying surface 22B of the conveyor belt 21B when the containment member 90 and the respective mobile unit 84 are located along the bottom stretch 82A of the guide 82.

The tabs 94 define containment surfaces 94A configured for delimiting the circumscribed spaces S.

In one or more preferred embodiments like the one illustrated, the tabs 94 of one and the same containment member 90 define with their own containment surfaces 94A a series of V-shaped profiles oriented in the direction of the path of advance K or in the opposite direction. The usefulness of the V-shaped profiles will become evident in what follows.

The series of containment members 90 provides for a continuous alternation of one containment member 90 with containment surfaces 94 that define V-shaped profiles oriented in the direction of the path of advance K and one containment member 90 with containment surfaces 94 defining V-shaped profiles oriented in the opposite direction.

During operation of the system, the mobile units 84 with the respective containment members 90 move along the guide 82 so that between the position P1 and the position P2 along the path of advance K each row of products 100 is accompanied by a containment member 90(I), which sets itself downstream of the row of products 100, along the path of advance K, and by a further containment member 90(II), which sets itself upstream of the same row, along the path of advance K.

The pair of the two containment members 90(I), 90(II) delimits the aforesaid circumscribed spaces S.

The stretch 82A enables the mobile units 84 to accompany with the respective containment members 90 the rows of products along the path of advance K. The stretches 82B, 82C, 82D of the guide 82 enable the mobile units 84 to bring back their respective containment members 90 to the position P1 to operate on new rows of products coming from the dispensing head 40.

In one or more preferred embodiments like the one illustrated, the system 10 comprises a linear electric motor 86 that develops along the guide 82 and is configured for movement of the mobile units 84 along the guide itself (in Figure 1 the motor 86 is illustrated only partially for simplicity of representation).

In particular, in one or more preferred embodiments like the one illustrated, the electric motor 86 comprises a series of electrical windings 86A arranged along the guide 82 and a plurality of magnets 86B fixed to the mobile units 84 and configured for interacting electromagnetically with the windings 86A to bring about a movement of the mobile units 84 along the guide 82.

Electric motors of this type are in themselves already known in the art, for example from the document EP0 939 482B1, and afford the advantage of providing a highly versatile movement system in which each of the mobile units can be moved in a way independent of the others; in particular, the movement parameters of each mobile unit, such as the position, speed, and acceleration, can be set in a way independent of the other mobile units.

According to an alternative embodiment, instead of the electric motor 86 described above, the system 10 may comprise a plurality of electric motors, each set on a respective mobile unit 84 for driving movement thereof.

In one or more preferred embodiments like the one illustrated, the system comprises a control unit 70 configured for driving the electric motor 86.

In one or more preferred embodiments, the control unit 70 is configured for driving the electric motor 86 as a function of a signal indicating the position of the rows of products 100 along the path of advance K, in a stretch upstream of the containment unit 80.

For this purpose, the system may for example comprise a camera 72 set above the first conveyor belt 21A and configured for detecting the rows of products 100 that advance along the path of advance K.

The control unit 70 or some other control unit of the system can use the data received from the camera 72 to generate data indicating the position of the rows of products 100 along the path of advance K.

The system may in any case use other types of devices for detecting the position of the rows of products 100.

With reference now to operation of the system 10, this envisages that a plurality of rows of products 100 will be supplied one after another to the conveyor belt 21A.

The dispensing head 40 operates for dispensing the filling within the cavity 101A of the products 101, as the rows of products 100 move underneath the head itself.

Incidentally, it should be noted that the dispensing head 40 may be configured to operate at the same time on just one row of products or else on a plurality of rows of products.

Simultaneously, the conveyor belt 21A can be operated to bring about a continuous movement of the rows of products 100 or else a step-like movement thereof. In the latter case, the dispensing head 40 can be moved according to a movement of tracking of the rows of products 100 along the path of advance K.

The rows of products 100 on which the filling has been dispensed then move, as a result of their advance, onto the conveying surface 22B of the second conveyor belt 21B.

With reference to Figures 1 and 2, before a single row of products 100 is transferred from the first conveyor belt 21A to the second conveyor belt 21B, its products 101 are received within the circumscribed spaces S defined by a pair of containment members 90 of the containment unit 80.

In particular, immediately before the row of products 100 reaches the position P1, a containment member 90(I) is arranged by the respective mobile unit 84(I) on the path of advance K, downstream of the row of products 100, and immediately after the same row 100 has passed beyond the position P1, a further containment member 90(II) is arranged by the respective mobile unit 84(II) on the path of advance K, upstream of the row 100.

Incidentally, it is pointed out that the first stretch of reversal of motion 82D enables approach of the two containment members 90(I), 90(II) to the conveying surface 22B and to the row of products 100, according to a movement of rotation from above downwards that facilitates positioning of the two containment members 90 up against the row of products 100 without interfering with it.

After the row of products 100 has been enclosed in the circumscribed spaces S defined by the two containment members 90(I), 90(II), these, carried by the two mobile units 84(I), 84(II), move along the path of advance K substantially at the same speed of advance as that of the row of products 100 so as to accompany it during its advance and keep its products within the circumscribed spaces S.

At this point, the row of products 100 is transferred onto the second conveyor belt 21B and subsequently passes through the vibrating station 60.

When the row of products 100 is subjected to the oscillatory motion discussed above in the vibrating station 60, the containment members 90 perform the function of keeping the products 101 within the circumscribed spaces S, preventing them from shifting in an uncontrolled manner from their predefined positions.

In this connection, with reference to Figure 2, it may be noted that between the containment surfaces 94A of the containment members 90 and the products 101 there may be a certain gap on account of which the aforesaid oscillatory motion may slightly displace the products 101 from their predefined positions, but in any case in a controlled manner, once again within the limits of the circumscribed spaces S.

Preferably, starting from a position P3 downstream of the vibrating station 60 and upstream of the position P2, the containment member 90(I) is moved by the respective mobile unit 84(I) at a speed lower than the speed of advance of the row of products 100 so that a relative displacement is obtained between the containment member 90(I) and the products 101 such as to bring the latter to bear upon the containment member itself and bring about an alignment thereof in one and the same direction transverse to the path of advance K.

It may now be noted that the V-shaped profiles defined by the containment surfaces 94A are able to bring about, as a result of the relative displacement between the containment member 90(I) and the products 101, centering of the products on a plurality of reference axes Ki parallel to the path of advance K, in addition to the aforesaid alignment of the products in a direction transverse to the path of advance.

Preferably, the position P3 is already located in a region of the third conveyor belt 21C, downstream of the conveyor belt 21B. The position P3 may in any case also be located in a region of the second conveyor belt 21B, especially in the cases where the propagation of the vibrations along the conveying surface 22B thereof is limited to a circumscribed stretch.

In an alternative embodiment, the alignment and centering of the products 101 described above may be obtained in an altogether similar way through a movement of the mobile unit 84 (II) and of the respective containment member 90(II) at a speed higher than the speed of advance of the products 101, equally bringing about a relative displacement between the containment member and the products.

Of course, the operations referred to above for alignment and centering of the products 101 are not to be deemed essential, above all in the cases where the containment members 90 set themselves without any gap with respect to the products 101 or else with a negligible gap so that the products 101 are in effect fixed in position on the conveying surface 22B.

In any case, it is also possible to envisage an alignment system of a known type configured to operate in a region of the conveyor 20 downstream of the containment unit 80.

When each of the two containment members 90(I), 90(II) reaches the position P2, it frees the row of products 100 through a movement of rotation from below upwards, caused by the advance of the respective mobile unit 84(I), 84(II) along the second stretch of reversal of motion 82B of the guide 82. Also in this case, it may be noted that the movement from below upwards induced by the stretch of reversal of motion 82B facilitates separation of the containment members 90 from the respective row of products 100, without any risk of interference with the latter.

The row of products 100 freed can then be supplied to subsequent processing stations, arranged downstream of the system 10 described herein.

On account of the foregoing, the row of products 100 will be characterized by a perfectly orderly arrangement of the products.

The person skilled in the sector will note that it is sufficient to configure the control unit 70 for driving the electric motor 86 in an appropriate way in order to reproduce the mode of operation described above of the containment unit 80.

Furthermore, in the case where there is the need to start operation of the system on different foodstuff products, it is sufficient to set the control unit 70 in such a way that it brings about a movement of the mobile units 84 useful for obtaining, through the containment members 90, circumscribed spaces S of dimensions suitable for the new products.

In this connection, it is again pointed out that the V-shaped profiles defined by the containment surfaces 94A of the containment members 90 enable creation of circumscribed spaces S that can be readily adapted to different product shapes, it being always possible to guarantee in any case an effective action of containment by the surfaces themselves.

In view of the foregoing, it hence appears clearly that the system described herein is able to operate on foodstuff products of different sizes and/or types without any need to modify or replace components of the system, unlike what occurs with the solutions according to the prior art described at the start of the present treatment.

## Claims

1. A system for supplying a filling to foodstuff products, the system comprising:
- at least one conveyor (20) for feeding along a path of advance (K) a succession of rows (100) of foodstuff products (101) oriented in a direction transverse to the path of advance (K);
- a dispensing head (40) for dispensing the filling onto or into the products of each row (100) of the succession of rows of foodstuff products; and
- a vibrating station (60) for subjecting each row of products fed by said at least one conveyor (20) to an oscillatory motion to spread out the filling dispensed,
wherein:
- said at least one conveyor (20) is configured, at least in part, for receiving the products in a free state, where they simply rest on a conveying surface and are not constrained in any way in a specific position; and
- said system comprises a containment unit (80), positioned above said at least one conveyor (20) and configured for containing the rows of products (100) while these are subjected to the oscillatory motion by said vibrating station (60).

2. The system according to claim 1, wherein said containment unit (80) comprises a series of containment members (90) mobile along the path of advance (K) and configured for defining a plurality of circumscribed spaces (S) individually housed within which are the products (101) of said rows of products (100) while these are subjected to said oscillatory motion by said vibrating station (60).

3. The system according to claim 1, wherein said containment unit (80) comprises at least one guide (82), which follows at least in part the path of advance (K) of said at least one conveyor (20), and a plurality of units (84) mobile along said guide (82), which each carry a respective containment member (90) of said series of containment members (90).

4. The system according to claim 3, comprising a linear electric motor (86) that develops along said guide (82) and is configured for moving said mobile units (84) along said guide (82).

5. The system according to claim 4, wherein said linear electric motor (86) comprises a series of electrical windings (86A) arranged in succession along said guide (82) and a plurality of magnets (86B) fixed to said plurality of mobile units (84) and configured to interact electromagnetically with said electrical windings (86A) to bring about a movement of said mobile unit (84) along said guide (82).

6. The system according to any one of the preceding claims, comprising a control unit (70) configured to control the movement of said series of containment members (90) so that each row of products that traverses said vibrating station (60) is accompanied by a containment member (90(I)) of said series of containment members (90), which is set downstream of said row of products along said path of advance (K), and by a further containment member (90(II)) of said series of containment members (90), which is set upstream of said row of products (100) along said path of advance (K), said containment member and said further containment member (90(I), 90(II)) defining circumscribed spaces (S) individually housed within which are the products of said row (100).

7. The system according to claim 6, wherein said control unit (70) is configured to move said containment member (90(I)) and said further containment member (90(II)) substantially at the same speed as that of said row of products (100) fed by said at least one conveyor (20).

8. The system according to claim 7, wherein said control unit (70) is configured to move said containment member (90(I)) or said further containment member (90(II)) at a speed lower or higher than the speed of said row of products fed by said at least one conveyor (20), after said row has been subjected to said oscillatory motion in said vibrating station (60), so as to obtain a relative displacement between said containment member (90(I)) or said further containment member (90(II)) and the products (101) of said row (100) such as to bring the latter to bear upon said containment member (90I) or said further containment member (90II) and bring about an alignment thereof in one and the same direction transverse to the path of advance (K).

9. The system according to any one of the preceding claims, wherein each containment member (90) of said series of containment members (90) has containment surfaces (94A) configured for delimiting said circumscribed spaces (S) that define V-shaped profiles oriented in the direction of the path of advance or in the opposite direction.

10. The system according to any one of the preceding claims, wherein each containment member (90) of said series of containment members (90) comprises a beam (92) set in a direction parallel to said at least one conveyor and oriented in a direction transverse to the path of advance (K), and a series of tabs (94) all projecting on one and the same side of said beam (92) and defining containment surfaces (94A) configured to delimit said circumscribed spaces (S).

11. A method for supplying a filling to foodstuff products (101), the method comprising:
- via at least one conveyor (20), feeding along a path of advance (K) a succession of rows of foodstuff products (101) oriented in a direction transverse to the path of advance (K);
- via a dispensing head (40), dispensing the filling onto or into the products of each row of the succession of rows of foodstuff products; and
- via a vibrating station (60), subjecting each row of products (100) fed by said at least one conveyor (20) to an oscillatory motion to spread out the filling dispensed;
wherein feeding the succession of rows of foodstuff products (100) via said at least one conveyor (20) includes receiving on said conveyor the products in a free state, where they simply rest on a conveying surface and are not constrained in any way in a specific position;
said method including, via a containment unit (80) positioned above said at least one conveyor (20), containing the rows of products (100) while these are subjected to the oscillatory motion by said vibrating station (60).

12. Method according to claim 11, wherein containing the rows of products (100) includes individually housing the products (101) of the rows of products (100) in a plurality of circumscribed spaces (S), delimited by a series of containment members mobile along the path of advance (K), of said containment unit (80).

13. The method according to claim 12, wherein individually housing the products (101) of the rows of products (100) in a plurality of circumscribed spaces (S) includes accompanying each row of products (100) that advances through said vibrating station (60) via a containment member (90(I)) that sets itself downstream of said row of products (100) along said path of advance (K), and via a further containment member (90(II)) that sets itself upstream of said row of products (100) along said path of advance (K),
said containment member and said further containment member (90(I), 90(II)) defining circumscribed spaces (S) individually housed within which are the products of said row (100).

14. The method according to claim 13, wherein accompanying each row of products (100) that advances through said vibrating station (60) includes moving said containment member (90(I)) and said further containment member (90(II)) along said path of advance (K) substantially at the same speed as that of said row of products (100) that advances along said path of advance (K).

15. The method according to claim 13 or claim 14, comprising, after said row has been subjected to said oscillatory motion by said vibrating station (60), moving said containment member (90(I)) or said further containment member (90(II)) at a speed lower or higher than the speed of said row of products that advances along said path of advance (K) so as to obtain a relative displacement between said containment member or said further containment member (90I, 90II) and the products of said row such as to bring the latter to bear upon said containment member or said further containment member (90I, 90II) and bring about an alignment thereof in one and the same direction transverse to the path of advance (K).

16. The method according to claim 15, comprising, during said relative displacement between said containment member (90(I)) or said further containment member (90(II)) and the products of said row, engaging said products of said row via containment surfaces (94A) of said containment member or of said further containment member (90I, 90II), which define V-shaped profiles oriented in the direction of the path of advance (K) or in the opposite direction, to bring about centering of said products of said row on a plurality of reference axes parallel to said path of advance (K).

## Patentansprüche

1. System zum Zuführen einer Füllung zu Lebensmittelprodukten, wobei das System umfasst:
- mindestens ein Förderband (20) zum Zuführen einer Folge von Reihen (100) von Lebensmittelprodukten (101), die in einer Richtung quer zum Förderweg (K) ausgerichtet sind, entlang eines Förderwegs (K);
- einen Abgabekopf (40) zum Abgeben der Füllung auf oder in die Produkte jeder Reihe (100) der Folge von Reihen von Lebensmittelprodukten; und
- eine Vibrationsstation (60) zum Unterwerfen jeder von besagtem mindestens einen Förderband (20) zugeführten Produktreihe einer oszillierenden Bewegung, um die abgegebene Füllung zu verteilen,
wobei:
- besagtes mindestens ein Förderband (20) zumindest teilweise zum Aufnehmen der Produkte in einem freien Zustand eingerichtet ist, in dem sie einfach auf einer Förderfläche aufliegen und in keiner Weise in einer spezifischen Position fixiert sind; und
- besagtes System eine Begrenzungseinheit (80) umfasst, die oberhalb besagten mindestens einen Förderbands (20) positioniert und zum Begrenzen der Produktreihen (100) eingerichtet ist, während diese der oszillierenden Bewegung durch besagte Vibrationsstation (60) unterworfen werden.

2. System nach Anspruch 1, wobei besagte Begrenzungseinheit (80) eine Reihe von Begrenzungselementen (90) umfasst, die entlang des Förderwegs (K) beweglich und zum Definieren einer Vielzahl von umschriebenen Räumen (S) eingerichtet sind, in denen individuell die Produkte (101) besagter Produktreihen (100) untergebracht sind, während diese besagter oszillierenden Bewegung durch besagte Vibrationsstation (60) unterworfen werden.

3. System nach Anspruch 1, wobei besagte Begrenzungseinheit (80) mindestens eine Führung (82), die zumindest teilweise dem Förderweg (K) besagten mindestens einen Förderbands (20) folgt, und eine Vielzahl von Einheiten (84) umfasst, die entlang besagter Führung (82) beweglich sind und jeweils ein jeweiliges Begrenzungselement (90) besagter Reihe von Begrenzungselementen (90) tragen.

4. System nach Anspruch 3, umfassend einen linearen Elektromotor (86), der sich entlang besagter Führung (82) erstreckt und zum Bewegen besagter beweglicher Einheiten (84) entlang besagter Führung (82) eingerichtet ist.

5. System nach Anspruch 4, wobei besagter linearer Elektromotor (86) eine Reihe von elektrischen Wicklungen (86A), die in Folge entlang besagter Führung (82) angeordnet sind, und eine Vielzahl von Magneten (86B) umfasst, die an besagter Vielzahl von beweglichen Einheiten (84) befestigt und zum elektromagnetischen Interagieren mit besagten elektrischen Wicklungen (86A) eingerichtet sind, um eine Bewegung besagter beweglicher Einheit (84) entlang besagter Führung (82) zu bewirken.

6. System nach einem der vorhergehenden Ansprüche, umfassend eine Steuereinheit (70), die zum Steuern der Bewegung besagter Reihe von Begrenzungselementen (90) eingerichtet ist, so dass jede Produktreihe, die besagte Vibrationsstation (60) durchläuft, von einem Begrenzungselement (90(I)) besagter Reihe von Begrenzungselementen (90), das stromabwärts besagter Produktreihe entlang besagten Förderwegs (K) angeordnet ist, und von einem weiteren Begrenzungselement (90(II)) besagter Reihe von Begrenzungselementen (90), das stromaufwärts besagter Produktreihe (100) entlang besagten Förderwegs (K) angeordnet ist, begleitet wird, wobei besagtes Begrenzungselement und besagtes weiteres Begrenzungselement (90(I), 90(II)) umschriebene Räume (S) definieren, in denen individuell die Produkte besagter Reihe (100) untergebracht sind.

7. System nach Anspruch 6, wobei besagte Steuereinheit (70) eingerichtet ist, um besagtes Begrenzungselement (90(I)) und besagtes weiteres Begrenzungselement (90(II)) im Wesentlichen mit derselben Geschwindigkeit wie die von besagter Produktreihe (100), die von besagtem mindestens einen Förderband (20) zugeführt wird, zu bewegen.

8. System nach Anspruch 7, wobei besagte Steuereinheit (70) eingerichtet ist, um besagtes Begrenzungselement (90(I)) oder besagtes weiteres Begrenzungselement (90(II)) nachdem besagte Reihe besagter oszillierenden Bewegung in besagter Vibrationsstation (60) unterworfen wurde, mit einer niedrigeren oder höheren Geschwindigkeit als die Geschwindigkeit besagter von besagtem mindestens einen Förderband zugeführten Produktreihe zu bewegen, um so eine relative Verschiebung zwischen besagtem Begrenzungselement (90(I)) oder besagtem weiteren Begrenzungselement (90(II)) und den Produkten (101) besagter Reihe (100) zu erzielen, um letztere dazu zu bringen, sich an besagtes Begrenzungselement (90I) oder besagtes weiteres Begrenzungselement (90II) anzulehnen und eine Ausrichtung derselben in ein und derselben Richtung quer zum Förderweg (K) zu bewirken.

9. System nach einem der vorhergehenden Ansprüche, wobei jedes Begrenzungselement (90) besagter Reihe von Begrenzungselementen (90) Begrenzungsflächen (94A) aufweist, die zum Begrenzen besagter umschriebener Räume (S) eingerichtet sind, die V-förmige Profile definieren, die in Richtung des Förderwegs oder in der entgegengesetzten Richtung orientiert sind.

10. System nach einem der vorhergehenden Ansprüche, wobei jedes Begrenzungselement (90) besagter Reihe von Begrenzungselementen (90) einen Träger (92), der in einer Richtung parallel zu besagtem mindestens einen Förderband angeordnet und in einer Richtung quer zum Förderweg (K) orientiert ist, und eine Reihe von Laschen (94) umfasst, die alle auf ein und derselben Seite besagten Trägers (92) vorstehen und Begrenzungsflächen (94A) definieren, die zum Begrenzen besagter umschriebener Räume (S) eingerichtet sind.

11. Verfahren zum Zuführen einer Füllung zu Lebensmittelprodukten (101), wobei das Verfahren umfasst:
- über mindestens ein Förderband (20), Zuführen einer Folge von Reihen von Lebensmittelprodukten (101), die in einer Richtung quer zum Förderweg (K) ausgerichtet sind, entlang eines Förderwegs (K);
- über einen Abgabekopf (40), Abgeben der Füllung auf oder in die Produkte jeder Reihe der Folge von Reihen von Lebensmittelprodukten; und
- über eine Vibrationsstation (60), Unterwerfen jeder von besagtem mindestens einen Förderband (20) zugeführten Produktreihe (100) einer oszillierenden Bewegung, um die abgegebene Füllung zu verteilen;
wobei das Zuführen der Folge von Reihen von Lebensmittelprodukten (100) über besagtes mindestens ein Förderband (20) das Aufnehmen der Produkte auf besagtem Förderband in einem freien Zustand einschließt, in dem sie einfach auf einer Förderfläche aufliegen und in keiner Weise in einer spezifischen Position fixiert sind;
wobei besagtes Verfahren über eine Begrenzungseinheit (80), die oberhalb besagten mindestens einen Förderbands (20) positioniert ist, das Begrenzen der Produktreihen (100) einschließt, während diese der oszillierenden Bewegung durch besagte Vibrationsstation (60) unterworfen werden.

12. Verfahren nach Anspruch 11, wobei das Begrenzen der Produktreihen (100) das individuelle Unterbringen der Produkte (101) der Produktreihen (100) in einer Vielzahl von umschriebenen Räumen (S) einschließt, die durch eine Reihe von Begrenzungselementen, die entlang des Förderwegs (K) beweglich sind, besagter Begrenzungseinheit (80) begrenzt werden.

13. Verfahren nach Anspruch 12, wobei das individuelle Unterbringen der Produkte (101) der Produktreihen (100) in einer Vielzahl von umschriebenen Räumen (S) das Begleiten jeder Produktreihe (100), die durch besagte Vibrationsstation (60) vorrückt, über ein Begrenzungselement (90(I)), das sich stromabwärts besagter Produktreihe (100) entlang besagten Förderwegs (K) anordnet, und über ein weiteres Begrenzungselement (90(II)), das sich stromaufwärts besagter Produktreihe (100) entlang besagten Förderwegs (K) anordnet, einschließt,
wobei besagtes Begrenzungselement und besagtes weiteres Begrenzungselement (90(I), 90(II)) umschriebene Räume (S) definieren, in denen individuell die Produkte besagter Reihe (100) untergebracht sind.

14. Verfahren nach Anspruch 13, wobei das Begleiten jeder Produktreihe (100), die durch besagte Vibrationsstation (60) vorrückt, das Bewegen besagten Begrenzungselements (90(I)) und besagten weiteren Begrenzungselements (90(II)) entlang besagten Förderwegs (K) im Wesentlichen mit derselben Geschwindigkeit wie die von besagter Produktreihe (100), die entlang besagten Förderwegs (K) vorrückt, einschließt.

15. Verfahren nach Anspruch 13 oder Anspruch 14, umfassend, nachdem besagte Reihe besagter oszillierenden Bewegung durch besagte Vibrationsstation (60) unterworfen wurde, das Bewegen besagten Begrenzungselements (90(I)) oder besagten weiteren Begrenzungselements (90(II)) mit einer niedrigeren oder höheren Geschwindigkeit als die Geschwindigkeit besagter entlang besagten Förderwegs (K) vorrückenden Produktreihe, um so eine relative Verschiebung zwischen besagtem Begrenzungselement oder besagtem weiteren Begrenzungselement (90I, 90II) und den Produkten besagter Reihe zu erzielen, um letztere dazu zu bringen, sich an besagtes Begrenzungselement oder besagtes weiteres Begrenzungselement (90I, 90II) anzulehnen und eine Ausrichtung derselben in ein und derselben Richtung quer zum Förderweg (K) zu bewirken.

16. Verfahren nach Anspruch 15, umfassend, während besagter relativer Verschiebung zwischen besagtem Begrenzungselement (90(I)) oder besagtem weiteren Begrenzungselement (90(II)) und den Produkten besagter Reihe, das Ineingriffbringen besagter Produkte besagter Reihe über Begrenzungsflächen (94A) besagten Begrenzungselements oder besagten weiteren Begrenzungselements (90I, 90II), die V-förmige Profile definieren, die in Richtung des Förderwegs (K) oder in der entgegengesetzten Richtung orientiert sind, um eine Zentrierung besagter Produkte besagter Reihe auf einer Vielzahl von Referenzachsen parallel zu besagtem Förderweg (K) zu bewirken.

## Revendications

1. Système pour fournir une garniture à des produits alimentaires, le système comprenant :
- au moins un convoyeur (20) pour alimenter le long d'un trajet d'avance (K) une succession de rangées (100) de produits alimentaires (101) orientés dans une direction transversale au trajet d'avance (K) ;
- une tête de distribution (40) pour distribuer la garniture sur ou dans les produits de chaque rangée (100) de la succession de rangées de produits alimentaires ; et
- une station vibrante (60) pour soumettre chaque rangée de produits alimentée par ledit au moins un convoyeur (20) à un mouvement oscillatoire pour étaler la garniture distribuée,
dans lequel :
- ledit au moins un convoyeur (20) est configuré, au moins en partie, pour recevoir les produits dans un état libre, où ils reposent simplement sur une surface de convoyage et ne sont contraints d'aucune manière dans une position spécifique ; et
- ledit système comprend une unité de confinement (80), positionnée au-dessus dudit au moins un convoyeur (20) et configurée pour contenir les rangées de produits (100) pendant que celles-ci sont soumises au mouvement oscillatoire par ladite station vibrante (60).

2. Système selon la revendication 1, dans lequel ladite unité de confinement (80) comprend une série d'éléments de confinement (90) mobiles le long du trajet d'avance (K) et configurés pour définir une pluralité d'espaces circonscrits (S) logés individuellement à l'intérieur desquels se trouvent les produits (101) desdites rangées de produits (100) pendant que celles-ci sont soumises audit mouvement oscillatoire par ladite station vibrante (60).

3. Système selon la revendication 1, dans lequel ladite unité de confinement (80) comprend au moins un guide (82), qui suit au moins en partie le trajet d'avance (K) dudit au moins un convoyeur (20), et une pluralité d'unités mobiles (84) se déplaçant le long dudit guide (82), qui portent chacune un élément de confinement respectif (90) de ladite série d'éléments de confinement (90).

4. Système selon la revendication 3, comprenant un moteur électrique linéaire (86) qui se développe le long dudit guide (82) et est configuré pour déplacer lesdites unités mobiles (84) le long dudit guide (82).

5. Système selon la revendication 4, dans lequel ledit moteur électrique linéaire (86) comprend une série d'enroulements électriques (86A) disposés en succession le long dudit guide (82) et une pluralité d'aimants (86B) fixés à ladite pluralité d'unités mobiles (84) et configurés pour interagir électromagnétiquement avec lesdits enroulements électriques (86A) pour provoquer un mouvement de ladite unité mobile (84) le long dudit guide (82).

6. Système selon l'une quelconque des revendications précédentes, comprenant une unité de commande (70) configurée pour commander le mouvement de ladite série d'éléments de confinement (90) de sorte que chaque rangée de produits qui traverse ladite station vibrante (60) soit accompagnée par un élément de confinement (90(I)) de ladite série d'éléments de confinement (90), qui est placé en aval de ladite rangée de produits le long dudit trajet d'avance (K), et par un autre élément de confinement (90(II)) de ladite série d'éléments de confinement (90), qui est placé en amont de ladite rangée de produits (100) le long dudit trajet d'avance (K), ledit élément de confinement et ledit autre élément de confinement (90(I), 90(II)) définissant des espaces circonscrits (S) logés individuellement à l'intérieur desquels se trouvent les produits de ladite rangée (100).

7. Système selon la revendication 6, dans lequel ladite unité de commande (70) est configurée pour déplacer ledit élément de confinement (90(I)) et ledit autre élément de confinement (90(II)) sensiblement à la même vitesse que celle de ladite rangée de produits (100) alimentée par ledit au moins un convoyeur (20).

8. Système selon la revendication 7, dans lequel ladite unité de commande (70) est configurée pour déplacer ledit élément de confinement (90(I)) ou ledit autre élément de confinement (90(II)) à une vitesse inférieure ou supérieure à la vitesse de ladite rangée de produits alimentée par ledit au moins un convoyeur (20), après que ladite rangée a été soumise audit mouvement oscillatoire dans ladite station vibrante (60), de manière à obtenir un déplacement relatif entre ledit élément de confinement (90(I)) ou ledit autre élément de confinement (90(II)) et les produits (101) de ladite rangée (100) de manière à amener ces derniers à buter contre ledit élément de confinement (90I) ou ledit autre élément de confinement (90II) et provoquer un alignement de ceux-ci dans une même direction transversale au trajet d'avance (K).

9. Système selon l'une quelconque des revendications précédentes, dans lequel chaque élément de confinement (90) de ladite série d'éléments de confinement (90) présente des surfaces de confinement (94A) configurées pour délimiter lesdits espaces circonscrits (S) qui définissent des profils en forme de V orientés dans la direction du trajet d'avance ou dans la direction opposée.

10. Système selon l'une quelconque des revendications précédentes, dans lequel chaque élément de confinement (90) de ladite série d'éléments de confinement (90) comprend une poutre (92) placée dans une direction parallèle audit au moins un convoyeur et orientée dans une direction transversale au trajet d'avance (K), et une série de languettes (94) toutes faisant saillie d'un même côté de ladite poutre (92) et définissant des surfaces de confinement (94A) configurées pour délimiter lesdits espaces circonscrits (S).

11. Procédé pour fournir une garniture à des produits alimentaires (101), le procédé comprenant :
- via au moins un convoyeur (20), alimenter le long d'un trajet d'avance (K) une succession de rangées de produits alimentaires (101) orientés dans une direction transversale au trajet d'avance (K) ;
- via une tête de distribution (40), distribuer la garniture sur ou dans les produits de chaque rangée de la succession de rangées de produits alimentaires ; et
- via une station vibrante (60), soumettre chaque rangée de produits (100) alimentée par ledit au moins un convoyeur (20) à un mouvement oscillatoire pour étaler la garniture distribuée ;
dans lequel l'alimentation de la succession de rangées de produits alimentaires (100) via ledit au moins un convoyeur (20) comprend la réception sur ledit convoyeur des produits dans un état libre, où ils reposent simplement sur une surface de convoyage et ne sont contraints d'aucune manière dans une position spécifique ;
ledit procédé comprenant, via une unité de confinement (80) positionnée au-dessus dudit au moins un convoyeur (20), le confinement des rangées de produits (100) pendant que celles-ci sont soumises au mouvement oscillatoire par ladite station vibrante (60).

12. Procédé selon la revendication 11, dans lequel le confinement des rangées de produits (100) comprend le logement individuel des produits (101) des rangées de produits (100) dans une pluralité d'espaces circonscrits (S), délimités par une série d'éléments de confinement mobiles le long du trajet d'avance (K), de ladite unité de confinement (80).

13. Procédé selon la revendication 12, dans lequel le logement individuel des produits (101) des rangées de produits (100) dans une pluralité d'espaces circonscrits (S) comprend l'accompagnement de chaque rangée de produits (100) qui avance à travers ladite station vibrante (60) via un élément de confinement (90(I)) qui se place en aval de ladite rangée de produits (100) le long dudit trajet d'avance (K), et via un autre élément de confinement (90(II)) qui se place en amont de ladite rangée de produits (100) le long dudit trajet d'avance (K),
ledit élément de confinement et ledit autre élément de confinement (90(I), 90(II)) définissant des espaces circonscrits (S) logés individuellement à l'intérieur desquels se trouvent les produits de ladite rangée (100).

14. Procédé selon la revendication 13, dans lequel l'accompagnement de chaque rangée de produits (100) qui avance à travers ladite station vibrante (60) comprend le déplacement dudit élément de confinement (90(I)) et dudit autre élément de confinement (90(II)) le long dudit trajet d'avance (K) sensiblement à la même vitesse que celle de ladite rangée de produits (100) qui avance le long dudit trajet d'avance (K).

15. Procédé selon la revendication 13 ou la revendication 14, comprenant, après que ladite rangée a été soumise audit mouvement oscillatoire par ladite station vibrante (60), le déplacement dudit élément de confinement (90(I)) ou dudit autre élément de confinement (90(II)) à une vitesse inférieure ou supérieure à la vitesse de ladite rangée de produits qui avance le long dudit trajet d'avance (K) de manière à obtenir un déplacement relatif entre ledit élément de confinement ou ledit autre élément de confinement (90I, 90II) et les produits de ladite rangée de manière à amener ces derniers à buter contre ledit élément de confinement ou ledit autre élément de confinement (90I, 90II) et provoquer un alignement de ceux-ci dans une même direction transversale au trajet d'avance (K).

16. Procédé selon la revendication 15, comprenant, pendant ledit déplacement relatif entre ledit élément de confinement (90(I)) ou ledit autre élément de confinement (90(II)) et les produits de ladite rangée, la mise en prise desdits produits de ladite rangée via des surfaces de confinement (94A) dudit élément de confinement ou dudit autre élément de confinement (90I, 90II), qui définissent des profils en forme de V orientés dans la direction du trajet d'avance (K) ou dans la direction opposée, pour provoquer le centrage desdits produits de ladite rangée sur une pluralité d'axes de référence parallèles audit trajet d'avance (K).
